# EUROPEAN PATENT SPECIFICATION

(11) **EP 4 212 789 B1**
(45) Date of publication and mention of the grant of the patent: **24.07.2024**
(21) Application number: 22151882.2
(22) Date of filing: 17.01.2022
(51) Int. Cl.: F24S 25/15

(54) **MOUNT FOR SOLAR MODULES**
HALTERUNG FÜR SOLARMODULE
SUPPORT POUR MODULES SOLAIRES

(43) Date of publication of application: 19.07.2023
(73) Proprietor: Sika Technology AG, 6340 Baar (CH)
(72) Inventor: Meier, Heinz, 8032 Zürich (CH); Gerhardt, Rocco, Watertown, 02472 (US)
(74) Representative: Sika Patent Attorneys

(56) References cited:
- DE-A1- 102010 062 026
- US-A1- 2010 212 714
- US-A1- 2012 199 180

## Description

### Technical field

The invention relates to a support device for mounting a solar module, especially a photovoltaic panel, on a mounting surface, in particular on a roof of a building. Furthermore, the invention is concerned with a kit of parts comprising a support device for mounting a solar module and at least one, preferably two or more, fastening member(s) for attachment of the support device to the mounting surface. Additional aspects of the invention are related to an arrangement in which the support device for a solar module is placed on a mounting surface and fixed with at least one, preferably two or more, of the fastening members.

### Background art

As a result of an increasing trend towards the adoption of renewable energy sources, the installation of solar modules, including photovoltaic panel and solar collectors, is gaining popularity, not only for industrial and institutional applications, but also in the domestic and rural environments. Whether for the industrial, institutional, domestic or rural environments, the solar modules often are mounted on facades or rooftops of buildings - most often in the area where the solar energy is required.

Roof structures are particularly convenient for this purpose as they present a large surface area directed towards the sun and are often largely out of view from the normal visual perspective, thereby rendering the installations relatively unobtrusive. Roof structures furthermore represent essentially free areas. Therefore, with roof structures, no additional land area is required for the installation of solar modules. Generally horizontal or flat rooftops are particularly convenient for this purpose as they provide an even and stable working environment for the assembly, installation and maintenance of solar modules or arrays thereof. In this connection, it will be noted that even "flat" or substantially horizontal rooftops will often have a slight grade or slope from a few degrees up to about 10° to promote rainwater drainage.

In most cases, horizontal or flat rooftops have a sealing layer as an outer covering and this sealing layer often is formed by a flexible membrane of a rubber-based or polymer-based material, sometimes including bituminous or tar-based compounds. In particular, the sealing layer or "skin" of flat rooftops is often formed by one or more sheets of a flexible material selected from the group including thermoplastic polyolefins (TPOs) or flexible polyolefins, flexible polyolefin alloys (FPA), ethylene propylene-diene M-class rubber (EPDM), polyvinyl chloride (PVC) and polymer-modified bitumen sheeting. Some of these materials have been in use in roofing structures since the 1960s and, as such, are commonly found on the rooftops of existing buildings today.

Such rooftops present particular problems in the mounting of solar module arrays because it is especially important to ensure that the outer sealing layer or membrane of the rooftop remains intact and that no, or only minimal, perforation or penetration of the sealing layer occurs. In this regard, the flexible outer layer or membrane serves to ensure a seal against the ingress of water into the roof structure. Accordingly, every time the outer sealing layer or membrane sustains a perforation or puncture, the waterproof properties of the membrane are compromised and a potential source of rainwater leakage or seepage into the roof is created.

In this regard, EP 2 418 438 A2 (Centrosolar AG) describes a solar panel mounting system comprising a support device for supporting the solar panel thereon, and at least one flexible fastening member for fixing the support device on a roof. The support device comprises a base adapted to seat stably on a substantially flat rooftop surface and an open mounting frame upstanding from the base, which is configured to support the solar panel such that said panel slopes downwardly towards a front edge region of the base. The flexible fastening member is adapted to engage and to extend from the support device, and has an attachment portion which is adapted to be secured to a rooftop surface. The attachment portion is for example adapted to be secured to the rooftop surface, in particular to a waterproof layer or membrane of the rooftop surface, without penetrating same; for example, by adhesive bonding, by fusion or welding (e.g. hot or cold welding).

However, technical demands on solar module installations are increasing more and more. Specifically, current engineering guidelines and standards, such as e.g. ANSI standard FM 4478:2014, place high demands on the installations in terms of mechanical stability, wind uplift and fire resistance, electrical safety and other performance attributes. Many of the currently known installation solutions cannot satisfy these requirements.

Document DE102010062026 A1 also discloses a support device for mounting a solar module.

There is thus a need to provide improved solutions, which can better fulfil current technical demands.

### Disclosure of the invention

It is an object of the present invention to provide improved solutions for installation of solar modules, in particular photovoltaic panels, on roofs and/or facades of a building. In particular, the solutions should allow to realize installations of solar modules that are as mechanically stable and safe as possible. In particular, the installations should be as insensitive as possible to wind forces, mechanical loads and allow for an installation on rooftops sealed with a polymer or rubber-based sheet layer or membrane, with no penetrations required for the support device. Further preferred, the solutions should be capable to realize solar module installations complying with current engineering guidelines and standards, especially with ANSI standard FM 4478:2014.

Surprisingly, it has been found that this object can be achieved with the features of claim 1. Thus, the core of the present invention is related to a support device for mounting a solar module, especially a photovoltaic panel, on a mounting surface, in particular on a roof of a building, the support device comprising:
a) a base body in the form of a U-shaped profile having two profile legs and a base section connecting the two profile legs; whereby an outer surface of the base section of the U-shaped profile is configured to support a solar module, and whereby a profile depth of the U-shaped profile increases along a longitudinal axis from a front face to a rear face of the U-shaped profile; and
b) at each of the two free end portions of the profile legs, at least one projection protruding from the respective profile leg, whereby the at least one projection is configured as a seating for placing the support device on the mounting surface; and
c) at least one fixing element which is configured to engage a fastening member for attachment of the support device to the mounting surface, whereby at each of the two free end portions of the profile legs of the U-shaped profile, an L-shaped bar is arranged which runs in parallel to the respective profile leg, preferably from the front face to the rear face of the U-shaped profile, whereby a first section of the L-shaped bar is contacting the free end portion of the respective profile leg and is configured as the at least one projection protruding from the respective profile leg and as the seating for placing the support device on a mounting surface, and at least one region of the second and free end of the L-shaped bar is configured as the fixing element.

Because the base body is based on a special U-shaped profile, the support device can be made with essentially closed side walls, which is advantageous in fire situations, and it also offers higher structural strength against uplift, e.g. caused by wind forces, and compressive forces, e.g. due to snow load.

Furthermore, the inventive support devices are highly beneficial in terms of aerodynamics which in turn reduces forces acting on the mounting surface. This is in particular helpful, if the mounting surface is a roof membrane.

Furthermore, thanks to the inventive structure, the support device can be produced in large parts or even entirely by deep-drawing in a highly efficient and flexible manner. Thereby various materials can be chosen, e.g. plastics or metals.

Deep-drawing furthermore allows a direct integration of structural elements, such as e.g. ribs and/or beads, to strengthen the support device. Additionally, the support device can be shaped without sharp edges that could damage roof membranes.

Likewise, it is possible to produce the support device by press brake forming, in particular if the device is made from metal. Thereby, structural elements, such as e.g. ribs and/or beads, can be realized by embossing, e.g. edge embossing.

Thus, with deep-drawing and press brake forming, assembly work, such as welding, screwing or bonding, can be reduced to a minimum.

If the support device is made from metal, it has advantages over e.g. plastic devices in fire situations and allows for an easy electrical grounding of the installation.

Also the inventive concept is highly flexible and allows for realizing support devices in various alternatives and modifications adapted to specific requirements without departing from the basic concept. For example, by cutting to length, the support device can be adapted for differently dimensioned solar modules. Also, the support devices can be constructed with low tilt angles, such as e.g. a few degrees. This helps to increase the resistance against wind forces.

The base body with the special U-shaped profile furthermore offers enough space to realize fixing elements at different positions, so that the support device can be attached to the mounting surface with differently designed fastening members, if desired. Also, the profile can be configured for connecting further elements, such as e.g. brackets and/or support rails to enhance the securement of the solar modules, or to interconnect several support devices, e.g. via the rear faces of their U-shaped profiles, in an easy and versatile manner.

As it turned out, the inventive approach allows for installation systems well in line with demanding requirements, such as e.g. defined in ANSI standard FM 4478:2014.

Additional aspects of the invention are subject of further independent claims. Particularly preferred embodiments are outlined throughout the description and the dependent claims.

### Ways of carrying out the invention

A first aspect of the present invention is related to a support device for mounting a solar module, especially a photovoltaic panel, on a mounting surface, in particular on a roof of a building, the support device comprising:
a) a base body in the form of a U-shaped profile having two profile legs and a base section connecting the two profile legs; whereby an outer surface of the base section of the U-shaped profile is configured to support a solar module, and whereby a profile depth of the U-shaped profile increases along a longitudinal axis from a front face to a rear face of the U-shaped profile; and
b) at each of the two free end portions of the profile legs, at least one projection protruding from the respective profile leg, whereby the at least one projection is configured as a seating for placing the support device on the mounting surface; and
c) at least one fixing element which is configured to engage a fastening member for attachment of the support device to the mounting surface, whereby at each of the two free end portions of the profile legs of the U-shaped profile, an L-shaped bar is arranged which runs in parallel to the respective profile leg, preferably from the front face to the rear face of the U-shaped profile, whereby a first section of the L-shaped bar is contacting the free end portion of the respective profile leg and is configured as the at least one projection protruding from the respective profile leg and as the seating for placing the support device on a mounting surface, and at least one region of the second and free end of the L-shaped bar is configured as the fixing element.

In particular, the two profile legs form essentially closed side faces of the support device along the entire length of the support device in a direction along its longitudinal axis. "Essentially closed side faces" means that the surfaces of the side faces are closed for the most part.

In particular, with respect to the to the total surface area of the profile legs, the surfaces of the side faces of the profile legs are at least 75% closed, preferably at least 85 % closed, most preferably at least 90% closed. In a special embodiment, the surfaces of the side faces are completely closed.

This ensures a high stability and advantages in fire situations. However, in special embodiments, openings in the profile legs might be present.

Especially, a proportion of openings and/or passages in the surface of each profile leg is less than 25%, especially less than 15%, in particular less than 10%, with respect to the total surface area of the profile leg.

In particular, the U-shaped profile is open at the front face and/or the rear face, especially such that there is a free passage through the entire support device along its longitudinal axis.

The profile legs preferably have trapezoidal shapes, especially right-angled trapezoidal shapes, and/or the base section has a rectangular shape. Such a shapes turned out to be optimal in terms of achieving the inventive advantages. Nevertheless other shapes are possible as well.

The support device is in particular configured for supporting the solar module at an angle of 3 - 40°, especially, 5 - 20°, preferably 6 - 8°, with respect to the mounting surface. Low tilt angels in particular help to increase the resistance against wind forces and on flat rooftops allow for south or east-west oriented solar module installations. However, if desired, support devices with smaller or larger support angles can be realized as well.

In a highly preferred embodiment, an angle between the base section and each of the two free end portions of the profile legs is 3 - 40°, especially, 5 - 20°, preferably 6 - 8°. This allow for directly realizing the above-mentioned tilt angles of the solar modules.

Preferably, the at least one projection protruding from each the profile legs is a flat flange extending in parallel to the longitudinal axis along the free end portion of the respective profile leg, in particular from the front face to the rear face of the U-shaped profile, and whereby, preferably an angle between the flat flange and the profile leg is about 70 - 110°, most preferably 90°. With such a flange, the support device can rest on the mounting surface along the whole length of the support device, which in turn reduces local pressure on the mounting surface, and/or the flange offers the possibility to flexibly attach further underlays, e.g. protective pads, at any desired position along the length of the support device.

However, in other embodiments, the at least one projection protruding from each the profile legs, can e.g. be realized in the form of one or more lugs or tabs, which might be spaced apart along the length of the support device.

The at least one fixing element in particular is meant to be a specially designed element of the support device, which is configured to engage a fastening member for attachment of the support device to the mounting surface.

Preferably the at least one fixing element comprises at least one fixing protrusion arranged at a free end portion of the at least one projection of each of the profile legs. Further preferred, the at least one fixing protrusion projects away from the mounting surface, if the support device is placed on the mounting surface as intended. Such fixing elements can be held in an interlocking and safe manner when using an appropriately designed fastening member. This improves the overall stability of the installation. Nevertheless, other fixing elements might be used as well, such as e.g. through holes and/or notches in the projections. Preferably, the at least one fixing protrusion is a flat flange running in parallel along the free end portion of the at least one projection, in particular from the front face to the rear face of the U-shaped profile.

In particular, the at least one fixing protrusion comprises one or more notches and/or openings for mechanically securing the fastening member on the support device, especially with a screw, a bolt, a rivet and/or a clamp.

According to the first aspect of the invention, at each of the two free end portions of the profile legs of the U-shaped profile, an L-shaped bar is arranged which runs in parallel to the respective profile leg, preferably from the front face to the rear face of the U-shaped profile, whereby a first section of the L-shaped bar is contacting the free end portion of the respective profile leg and is configured as the at least one projection protruding from the respective profile leg and as the seating for placing the support device on a mounting surface, and at least a region of the second and free end of the L-shaped bar is configured as the fixing element and/or the at least one fixing protrusion. Such a structure can directly be produced by deep-drawing or press brake forming and offers a very high flexibility with regard to the attachment of the support device on the mounting surface.

In particular, the first section of the L-shaped bar is a flat flange, especially as described above, which runs in parallel to the respective profile leg, and the second and free end of the L-shaped bar is a further flat flange protruding from the first section or the flat flange, respectively, at an angle of approximately 90°. Thus, in this case, the flat flange and the further flat flange form the L-shaped bar.

The at least one projection protruding from each the profile legs or the first section of the L-shaped bar, respectively, in particular comprises one or more notches and/or openings for mechanically attaching one or more underlay elements, especially one or more protective pads.

Especially, the support device comprises an omega-shaped cross-section, preferably along the entire length of the device from the front face to the rear face.

Further preferred, the base body, the projections and/or the at least one fixing element comprises at least one, preferably several, spaced apart support ribs, especially running in a direction perpendicular to a longitudinal axis of the support device and/or the mounting surface. Especially at least a portion of the support ribs are arranged in the two profile legs. Such support ribs help to further stabilize the overall structure of the support device.

Especially, at least the base body is an integrally formed part. More preferably, the base body is integrally formed with the projections and the fixing element. Most preferably, the complete support device is an integrally formed part.

In particular, at least the base body, preferably the base body with the projections and the fixing element, most preferably the complete support device, is a deep-drawing part. As mentioned above, this in particular allows for a highly efficient production.

In another preferred implementation, at least the base body, preferably the base body with the projections and the fixing element, most preferably the complete support device, is a press brake formed part. Thereby, preferably, the press brake formed part comprises structural elements, such as e.g. ribs and/or beads, preferably embossed ribs and/or beads, for stabilizing one or more bent edges.

Furthermore, the support device may comprise an optional ballast tray for further securing the support device on an essentially horizontal mounting surface, e.g. against excessive uplift forces. The ballast tray preferably is located in between the two profile legs. For example, the ballast tray can be configured for receiving a ballast with cuboid shape, e.g. a paver stone.

Especially, the support device further comprises at least one connector element, especially a mounting angle, for mechanically connecting two support devices as described above with their rear faces of the U-shaped profiles facing each other. This allows for a direct interconnection of two support elements, such that the solar modules can be arranged in a saddle roof-like structure on the mounting surface. Installations with such kind of structures are highly stable, especially against wind forces. However, different interconnections between individual support devices are possible as well.

In a highly preferred embodiment, at least the base body, preferably the base body with the projections and the fixing element, most preferably the complete support device, is made of metal, especially steel. This is in particular advantageous in fire situations and allows for ad direct electrical grounding of the installation.

Especially, if the support device comprises metal elements or is made of metal, the support device comprises a corrosion protection.

Especially, the corrosion protection is selected from a coating, in particular a zincbased coating, especially a coating with a zinc alloy comprising 1 - 5 wt.%, especially 3.5 wt.%, of aluminum and 1 - 5 wt.%, especially 3 wt.%, magnesium. A suitable coating is available from ArcelorMittal Europe under the tradename Magnelis^{®}. These special coatings provide stable and durable layers across the entire surface and edges of the steel, which in turn provides more effective corrosion protection than coatings with other compositions.

In a further preferred embodiment, the corrosion protection is realized by using galvanized steel sheet as material for the support device.

Another aspect of the present invention is related to a kit of parts comprising a support device as described above and at least one, preferably two or more, fastening member(s) for attachment of the support device to the mounting surface.

In particular, in the kit of parts there are two, three, four or six fastening members per support device.

Thereby, preferably, the fastening member(s) is/are configured for engaging the at least one fixing element of the support device with positive fit.

Engaging with positive fit in particular means that an interlocking connection between the fastening member(s) and the at least one fixing element is/are established when the support device is fixed with the fastening member(s) on the mounting surface. This especially such that the support device cannot come loose from the mounting surface in a direction perpendicular to the mounting surface or, more preferably, in any direction.

An engagement with positive fit or an interlocking connection occurs for example when the relative motion of the fastening member(s) and the at least one fixing element is blocked by design details, e.g. the shape.

For example, the at least one fixing element has a shape which is complementary to the engaging section of the fastening member(s).

Especially the fastening member comprises a base plate section and a profile section projecting upward from the base plate section, which is configured to surround and positively fix the at least one fixing element of the support device.

Preferably, the base plate section is an at least partly flexible base plate section and the profile section is a substantially stiff profile section. Put differently, this means that the base plate section is more flexible than the profile section. This allows for forming the fastening member with its base plate onto the mounting surface.

In one embodiment the baseplate section has a strip-like first partial section from which the profile section rises up, and a second partial section extending in lateral direction and forming a widened section. Especially, said second partial section is more flexible than the first partial section.

In another embodiment, the baseplate section has a third and a fourth partial section extending from the ends of the first partial section to the side opposite the second partial section. Both embodiments serve to make a sufficiently large base surface of the fastening member available in an advantageous manner that will ensure, in particular, a support on the base on both sides of the profile support section fixed to the fastening member.

In a preferred embodiment, the profile section is U-shaped and the "U" is open toward the base plate section in such a way that the fixing element of the support device, especially a profile section of the support device, can be enclosed between the base plate section and the profile section of the fastening member.

Especially, the profile section has a free first shank which is spaced by a sufficiently wide slot from the base plate section, such that the fixing element of the support device can be introduced laterally into the profile section of the fastening member through the slot by tilting it about an axis parallel to its longitudinal extension.

It is provided in one embodiment that the second shank of the "U" is connected stiffly, in particular integrally to the base plate section. Furthermore, it is provided in terms of design that stiffening ribs running transversely to the longitudinal extent of the first partial section of the base plate section are formed in the throat between the profile section and the base plate section where the second shank of the "U" is connected to the base plate section. On the whole, a configuration of the fastening member that is preferably constructed in such a manner ensures sufficient stiffness and a stable position of the fastened support on the base, while at the same time ensuring sufficient ease of installation and a durable fastening on the base.

In another embodiment, the fastening member is manufactured as integral, in particular as in injection-molded, part. In this case a unified material construction can be provided, but as an alternative a construction consisting of a first material component for the flexible base plate section and a second material component for the (substantially) stiff profile section can be provided.

Especially, at least the base plate section is manufactured from heat weldable material, in particular PVC or TPO. This takes into account the fact that waterproof layers or membranes of rooftop surfaces on which the fastener is to be used often consist of PVC or TPO (also referred to as FPO), although so-called liquid waterproofing membranes (LAM) are also considered as possible bases.

Especially, a length of the profile section is at least 3 times, preferably at least 5 times as large as a maximal extension in a direction perpendicular to the longitudinal direction of the profile section. As a result, the fastening member can create an especially reliable fastening. Alternatively, or additionally, the profile section can have a constant material thickness. As a result, the profile section can be produced in an especially simple manner and can nevertheless ensure a secure connection.

A material thickness of the profile section is preferably greater, for example at least 1.2 times or at least 1.5 times greater, than a material thickness of the baseplate section.

Alternatively or additionally, an elastic modulus, especially the Young's modulus (E), of the profile section can be greater than an elastic modulus, especially the Young's modulus (E), of a material of the baseplate section, especially at least 1.2 times or at least 1.5 times or at least twice as great. As a result of these measures, an increased stiffness of the profile section relative to the baseplate section can be achieved in a simple manner.

In a preferred embodiment, a height of the profile section is greater than a width of the profile section, preferably at least 1.5 times greater, further preferably at least 2 times greater and even more preferably at least 3 times greater. The direction of the height is perpendicular to the surface of the baseplate section. The direction of the width is perpendicular to the direction of the height and the longitudinal direction provided by the extension of the profile section. As a result, a longitudinal edge of a roof installation support can be accommodated especially securely in the profile section, wherein the different degrees of stiffness can be utilized synergistically by the base body section and the profile section. On the whole, a reliable fastening can be achieved with simple measures. If the profile section is a U profile section (as described further above), the second shank of the "U" opposite the first shank can be larger than a connecting section between the two shanks, in particular at least 1.5 times, preferably at least 2 times, and even more preferably at least 3 times as large. In the case (as described above) of a U-shaped design of the profile section, the height of the profile section is defined by the second shank opposite the first shank. A width is defined by the connecting section between the two shanks.

In a further preferred embodiment, the kit of parts comprises one or more protective pads, which are configured for being mechanically attached to the at least one projection protruding from each of the profile legs, whereby the protective pads preferably are made of a material different than the support device, especially from a plastics material.

Especially, the one or more protective pads comprises a snap-in connector, which is configured for being fixed in one or more notches and/or openings of the projection protruding from each the profile legs.

Such pads can be used to protect a waterproof layer or membrane of the rooftop surface against sharp edges of the support device.

A further aspect of the present invention is directed to an arrangement comprising:
- at least one, preferably at least two, support devices as described above and
- at least one fastening member as described above,
whereby the at least one support device is placed on a mounting surface, especially on a roof of a building, and fixed to the mounting surface with at least one, preferably two or four, of the fastening members.

Thereby, preferably, the substantially stiff profile section of the fastening member projecting upward from the base plate surrounds and positively fixes the at least one fixing element of the support device.

Preferably, the substantially stiff profile section of the fastening member projecting upward from the base plate is secured to the at least one fixing element of the support device with an additional mechanical link, especially with a screw, a bolt, a rivet and/or a clamp.

More preferably, at least one, preferably, two, four or six, protective pads as described above are attached to the at least one projection protruding from each the profile legs of the support device and placed between the projections and the mounting surface.

If there is more than one support device, at least a part of the support devices are preferably arranged spaced apart in parallel alignment. This allows for arranging several solar modules in a row.

In a further preferred embodiment, at least two, especially all, support devices are arranged pairwise with their rear faces of the U-shaped profiles facing each other, especially such that solar modules can be arranged in a saddle roof-like structure on the mounting surface. Thereby, preferably, the longitudinal axes of the pairwise arranged support devices run in parallel.

Preferably pairwise arranged support devices are interconnected with each other, especially via at least one connector element, especially a mounting angle.

In particular, a solar module, especially a photovoltaic panel, is fixed on the base sections of the U-shaped profiles of at least two supporting devices.

Thereby, preferably, the solar module is connected to the supporting device via one or more support rails, which extend between neighboring supporting devices. Especially, there are two spaced apart support rails in parallel alignment extending between neighboring support devices. Preferably, the two spaced apart support rails are located at the front end and the rear end of the outer surface of the base section of the U-shaped profile.

The support rails in particular run in a direction perpendicular to the longitudinal axes of the support devices. Support rails can be configured to run from one support device to the neighboring support device or they can extend over several support devices.

The support rails can be mounted mechanically to the outer surface of the base section of the U-shaped profile, e.g. via longholes. This allows the installation of solar modules of any common size.

The solar modules can for example be introduced into a recess of a first support rail with positive fit, and mechanically clamped to the second support rail. In another embodiment, the solar modules are clamped onto both rails. In a still further embodiment, the solar modules be introduced into a recess of a first support rail with positive fit and into a recess of a second support rail with positive fit. In the latter case, if required, the solar modules can additionally be fixed for preventing lateral movements.

Another aspect of the present invention is directed to the use of a support device or of a kit of parts as described above for mounting a solar module, especially a photovoltaic panel, on a mounting surface, in particular on a roof of a building.

Further advantageous configurations of the invention are evident from the exemplary embodiments.

### Brief description of drawings

The drawings used for illustration of the invention show:
- Fig. 1: A perspective view of an inventive support device for mounting a solar module, especially a photovoltaic panel, on a mounting surface;
- Fig. 2: A perspective view of a fastening member for attachment of the support device of Fig. 1 to the mounting surface;
- Fig. 3: A perspective view of an arrangement comprising the support device of Fig. 1 and two fastening members as shown in Fig. 2;
- Fig. 4: A top view of the arrangement of Fig. 3;
- Fig. 5: A schematic representation of an arrangement of four solar modules mounted on a membrane on a rooftop with inventive support devices and fastening members in a side view;
- Fig. 6: A top view of the arrangement of Fig. 5.

In the figures, the same components are given the same reference symbols.

### Exemplary embodiments

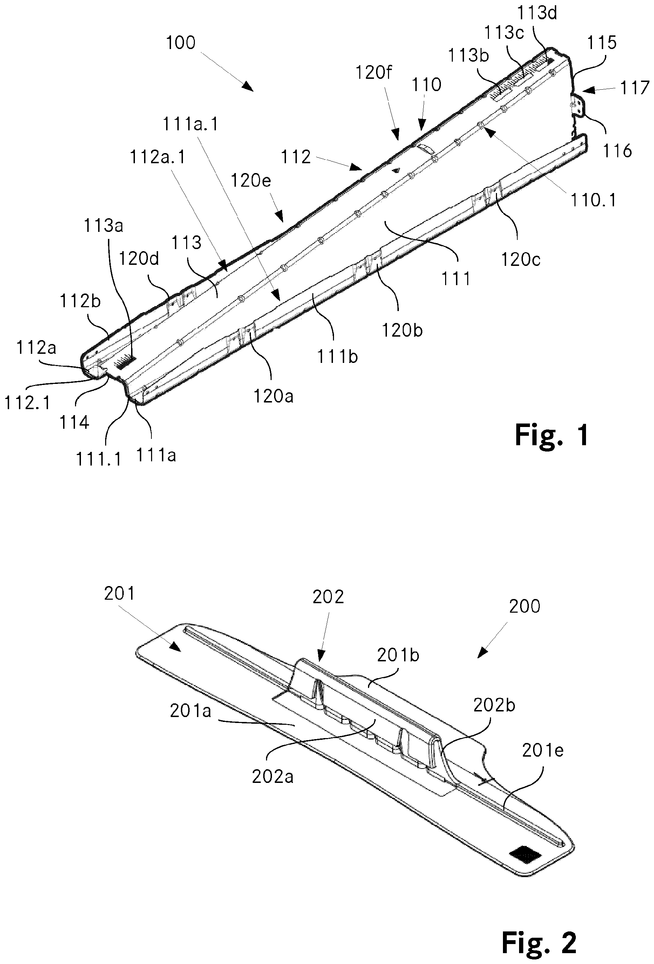

Fig. 1 shows a perspective view of a support device 100 for mounting a solar module, especially a photovoltaic panel. The support device 100 comprises a base body in the form of a U-shaped profile 110 with two profile legs 111, 112 with congruent right-angled trapezoidal shapes and a rectangular base section 113 in between. The profile depth of the U-shaped profile 110 increases along a longitudinal axis from a front face 114 to a rear face 115 of the U-shaped profile 110.

In Fig. 1, the outer surface of the base section 113 is visible, which is configured to support a solar module. For fixing the solar module or a support rail, respectively, the base section 113 comprises several longholes 113a, 113b, 113c, 113d in the region of the front face 114 and the rear face 115.

At each of the two free end portions 111.1, 112.1 of the profile legs 111, 112, a projection in the form of a flat flange 111a, 112a is protruding at an angle of 90° from the respective profile leg along the whole length from the front face 114 to the end face 115. The flat bars 111a, 112a are configured as a seating for placing the support device 100 on a mounting surface. An angle between the base section 113 and the flat flanges 111a, 112a is for example 7°. In this case, the support device is configured for supporting the solar module at an angle of 7° with respect to the mounting surface.

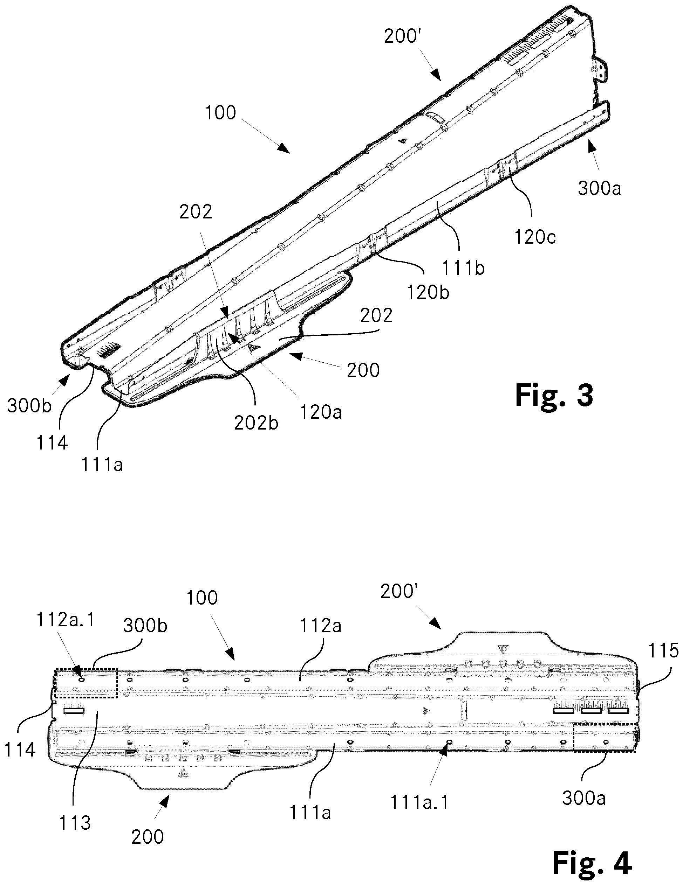

The flat flanges 111a, 112a each comprises several spaced apart openings 111a. 1, 112a. 1 (not shown in Fig. 1; cf. Fig. 4) in the form of through holes for mechanically attaching one or more protective pads.

Further flat flanges 111b, 112b are running in parallel along the free end portions of the flat flanges 111a, 112a from the front face 114 to the rear face 115 of the U-shaped profile 110. The further flat flanges 111b, 112b each comprise three sections 120a, 120b, 120c and 120d, 120e, 120f, respectively, whereby each of the sections form a fixing element or a fixing protrusion, respectively, with two through holes for mechanically securing a fastening member for attachment of the support device 100 to a mounting surface.

The flat flanges 111a, 112a together with the further flat flanges 111b, 112b form an L-shaped bar running from the front face 114 to the rear face 115 of the U-shaped profile 110. Thus, in an overall view, the U-shaped profile 110 together with the flat flanges 111a, 112a, 111b, 112b has an omega-shaped cross-section along the entire length.

At the rear face 115 of the U-shaped profile 110, each of the profile legs 111, 112 furthermore comprises a mounting angle 116, 117, for mechanically connecting two support devices with their rear faces of the U-shaped profiles facing each other.

The whole support device 100 including the base body 110 together with the flat flanges 111a, 112a, 111b, 112b and the mounting angles 116, 117 is an integrally formed part, i.e. a press brake formed part, having several beads 110.1 at the edges between the profile legs 111, 112 and the base section 113 for stabilizing the structure. Thereby the base body 110 is made from steel and coated with a zinc alloy comprising 3.5 wt.% of aluminum and 3 wt.% of magnesium.

Fig. 2 shows a perspective view of a fastening member 200 for attachment of the support device 100 to the mounting surface, e.g. a roof. The fastening member 200 is manufactured as an integral injection molded part, e.g. from a heat weldable material such as PVC or TPO, and comprises a substantially level base plate section 201 which has a certain flexibility and a stiff profile section 202 projecting upward from it. The baseplate section 201 has a strip-like first partial section 201a from the central area of which the profile section 202 rises up and a second partial section 3b extending in lateral direction forming a widened section. A stiffening rib 201e is formed in the strip-like first partial section 201a, which runs essentially along the whole length of the base plate section 201.

The profile section 202 projects upward from the stiffening rib 201e and has a narrow U-shaped structure. The U-shaped structure is open on one side toward the baseplate section 201. Accordingly, the U-shaped profile section 202 has a free first shank 202a and a second shank 202b connected to the baseplate section 201. Stiffening ribs (not shown in Fig. 2; cf. Fig. 3) on the backside of the second shank 202b additionally reinforce the profile section 202.

The U-shaped profile section 202 is configured such that it can engage with one of the sections 120a, 120b, 120c, 120d, 120e, 120f (i.e. the fixing elements of the support device 100) of the further flat flanges 111b, 112b with positive fit. Therefore, a width of between the first shank 202a and a second shank 202b of the fastening member 200 corresponds to a width of the further flat flanges 111b, 112b. Additionally, the fastening member 200 can be secured to the further flat flanges 111b, 112b with screws (not shown).

Fig. 3 and 4 show an arrangement comprising the support device 100, a first fastening member 200 and a second fastening member 200'. The second fastening member is identical in construction with the first fastening member 200.

Specifically, the first fastening member 200 engages section 120a of the support device 100 with its profile section 202 in a form fitting manner. Likewise, the second fastening member 200' engages the section 120f of the support device 100 with its profile section 202' in form fitting manner. In this configuration, the support device 100 can be fixed for example on a flexible membrane on a roof of a building. Thereby, the fastening member can be welded to the membrane in order to secure the support device 100 on the roof.

Additionally, the arrangement of Fig. 3 and 4 comprises protective pads 300a, 300b made from a plastic material. The pads 300a, 300b are mechanically attached to the flat flanges 111a, 112a via the spaced apart openings 111a.1, 112a. 1, which allow to fix the pads 300a, 300b e.g. with a snap connector. The pads 300a, 300b have a thickness which is about the same as the thickness of the baseplate section 201.

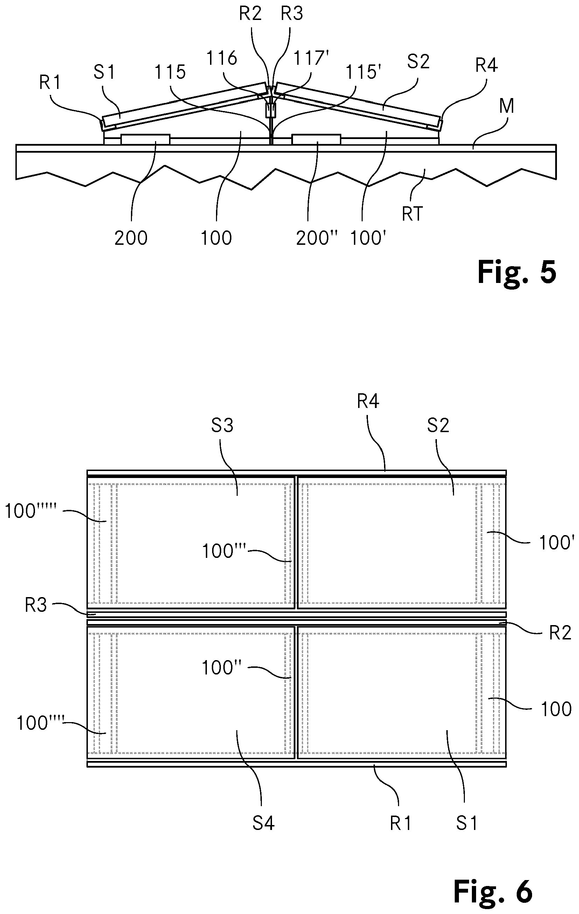

Fig. 5 and 6 schematically show an arrangement of four solar modules S1, S2, S3, S4 mounted on a membrane M on a rooftop RT with inventive support devices and fastening members. The side view of Fig. 5 shows a first support device 100 facing with its rear face 115 the rear face 115' of a second support device 100'. The support device 100' is identical in design as the support device 100. Both support devices are interconnected with each other via their opposing mounting angles 116, 117'. As evident from the top view in Fig. 6, there are two further pairs of support devices 100", 100‴ and 100ʺʺ, 100‴ʺ, which are spaced apart and configured in the same manner and identical in design as the first pair consisting of support devices 100, 100'.

On top of the support devices 100, 100', 100", 100'", 100"", 100‴ʺ, there are four support rails R1, R2, R3, R4 running in parallel and serving as a support for the solar modules S1, S2, S3, S4. Thereby, the four solar modules are arranged in a saddle roof-like structure on the rooftop RT.

## Claims

1. Support device (100) for mounting a solar module (S1, S2, S3, S4), especially a photovoltaic panel, on a mounting surface, in particular on a roof of a building (M, RT), the support device (100) comprising:
a) a base body in the form of a U-shaped profile (110) having two profile legs (111, 112) and a base section (113) connecting the two profile legs (111, 112); whereby an outer surface of the base section (113) of the U-shaped profile (110) is configured to support a solar module (S1, S2, S3, S4), and whereby a profile depth of the U-shaped profile (110) increases along a longitudinal axis from a front face (114) to a rear face (115) of the U-shaped profile (110); and
b) at each of the two free end portions (111.1, 112.1) of the profile legs (111, 112), at least one projection (111a, 112a) protruding from the respective profile leg (111, 112), whereby the at least one projections (111a, 112a) are configured as a seating for placing the support device (100) on a mounting surface; and
c) at least one fixing element (120a, 120b, ... , 120f) which is configured to engage a fastening member (200) for attachment of the support device (100) to the mounting surface,
**characterized in that**
at each of the two free end portions (111.1, 112.1) of the profile legs (111, 112) of the U-shaped profile (110), an L-shaped bar is arranged which runs in parallel to the respective profile leg (111, 112), preferably from the front face (114) to the rear face (115) of the U-shaped profile (110), whereby a first section of the L-shaped bar is contacting the free end portion (111.1, 112.1) of the respective profile leg (111, 112) and is configured as the at least one projection (111a, 112a) protruding from the respective profile leg (111, 112) and as the seating for placing the support device (100) on a mounting surface, and at least one region of the second and free end (111b, 112b) of the L-shaped bar is configured as the fixing element (120a, 120b, ..., 120f).

2. Support device (100) according to claim 1, whereby the two profile legs (111, 112) form side faces of the support device (100), which are closed for the most part along the entire length of the support device (100) in a direction along its longitudinal axis.

3. Support device (100) according to claim 2, whereby, with respect to the to the total surface area of the profile legs (111, 112), the surfaces of the side faces of the profile legs (111, 112) are at least 75 % closed, preferably at least 85 % closed, most preferably at least 90 % closed.

4. Support device (100) according to any of preceding claims, whereby the profile legs (111, 112) have trapezoidal shapes, especially right-angled trapezoidal shapes, and the base section (113) has a rectangular shape.

5. Support device (100) according to any of preceding claims, whereby the support device (100) is configured for supporting the solar module (S1, S2, S3, S4) at an angle of 3 - 40°, especially, 5 - 20°, preferably 6 - 8°, with respect to the mounting surface.

6. Support device (100) according to any of preceding claims, whereby the at least one projection (111a, 112a) protruding from each the profile legs (111, 112) is a flat flange extending in parallel to the longitudinal axis along the free end portion (111.1, 112.1) of the respective profile leg (111, 112), in particular from the front face (114) to the rear face (115) of the U-shaped profile (110), and whereby, preferably an angle between the flat flange and the profile leg (111, 112) is about 70 - 110°, most preferably 90°.

7. Support device (100) according to any of preceding claims, whereby the at least one projection (111a, 112a) protruding from each of the profile legs (111, 112) or the first section of the L-shaped bar comprises one or more notches and/or openings (111a.1, 112a.1) for mechanically attaching one or more protective pads (300a, 300b).

8. Support device (100) according to any of preceding claims, whereby at least the base body is an integrally formed part, preferably, the base body is integrally formed with the projections (111a, 112a) and the fixing element (120a, 120b, ..., 120f), most preferably, the complete support device (100) is an integrally formed part.

9. Support device (100) according to any of preceding claims, further comprising at least one connector element (116, 117), especially a mounting angle, for mechanically connecting two support devices (100, 100') as described in any of preceding claims with their rear faces (115, 115') of the U-shaped profiles (110) facing each other.

10. Kit of parts comprising a support device (100) according to any of claims 1 - 9 and at least one, preferably two or more, fastening member(s) (200) for attachment of the support device (100) to the mounting surface, whereby the at least one fastening member (200) comprises a base plate section (201) and a profile section (202) projecting upward from the base plate section (201), which is configured to surround and positively fix the at least one fixing element (120a, 120b, ..., 120f) of the support device (100).

11. Kit of parts according to claim 10, further comprising one or more protective pads (300a, 300b), which are configured for being mechanically attached to the at least one projection (111a, 112a) protruding from each of the profile legs (111, 112), whereby the protective pads (300a, 300b) preferably are made of a material different than the support device (100), especially from a plastics material.

12. Arrangement comprising at least one, preferably at least two, support devices (100) according to any of claims 1 - 9 and at least one fastening member (200) as described in any of claims 10- 11 or comprising a kit of parts according to any of claims 10- 11, whereby the support device (100) is placed on a mounting surface, especially on a roof of a building (M, RT), and fixed to the mounting surface with at least one, preferably two or more, of the fastening members (200).

13. Arrangement according to claim 12, whereby the profile section (202) of the fastening member (200) projecting upward from the base plate (201) surrounds and positively fixes the at least one fixing element (120a, 120b, ..., 120f) of the support device (100).

14. Arrangement according to any of claims 12 - 13, whereby at least one, preferably, two, four or six, protective pads (300a, 300b) as described in claim 12 are attached to the at least one projections (111a, 112a) protruding from each the profile legs (111, 112) of the support device(100) and placed between the projections (111a, 112a) and the mounting surface.

## Patentansprüche

1. Tragvorrichtung (100) zum Befestigen eines Solarmoduls (S1, S2, S3, S4), insbesondere eines Fotovoltaikmoduls, auf einer Montagefläche, insbesondere auf einem Dach eines Gebäudes (M, RT), wobei die Tragvorrichtung (100) umfasst:
a) einen Basiskörper in Form eines U-förmigen Profils (110) mit zwei Profilschenkeln (111, 112) und einem die zwei Profilschenkel (111, 112) verbindenden Basisabschnitt (113); wobei eine Außenfläche des Basisabschnitts (113) des U-förmigen Profils (110) zum Tragen eines Solarmoduls (S1, S2, S3, S4) ausgelegt ist, und wobei eine Profiltiefe des U-förmigen Profils (110) entlang einer Längsachse von einer Vorderseite (114) zu einer Rückseite (115) des U-förmigen Profils (110) zunimmt; und
b) an jedem der zwei freien Endabschnitte (111.1, 112.1) der Profilschenkel (111, 112) mindestens einen von dem jeweiligen Profilschenkel (111, 112) abstehenden Vorsprung (111a, 112a), wobei der mindestens eine Vorsprung (111a, 112a) als Auflage zum Aufsetzen der Tragvorrichtung (100) auf eine Montagefläche ausgelegt ist; und
c) mindestens ein Fixierelement (120a, 120b, ..., 120f), das dazu ausgelegt ist, mit einem Befestigungselement (200) in Eingriff zu kommen, um die Tragvorrichtung (100) an der Montagefläche anzubringen,
**dadurch gekennzeichnet, dass**
an jedem der zwei freien Endabschnitte (111.1, 112.1) der Profilschenkel (111, 112) des U-förmigen Profils (110) ein L-förmiger Steg angeordnet ist, der parallel zum jeweiligen Profilschenkel (111, 112), vorzugsweise von der Vorderseite (114) zur Rückseite (115) des U-förmigen Profils (110), verläuft, wobei ein erster Abschnitt des L-förmigen Stabes den freien Endabschnitt (111.1, 112. 1) des jeweiligen Profilschenkels (111, 112) berührt und als der mindestens eine von dem jeweiligen Profilschenkel (111, 112) abstehende Vorsprung (111a, 112a) und als Auflage zum Aufsetzen der Tragvorrichtung (100) auf eine Montagefläche ausgelegt ist, und mindestens ein Bereich des zweiten und freien Endes (111b, 112b) des L-förmigen Stabes als Fixierelement (120a, 120b, ..., 120f) ausgelegt ist.

2. Tragvorrichtung (100) nach Anspruch 1, wobei die zwei Profilschenkel (111, 112) Seitenflächen der Tragvorrichtung (100) bilden, die größtenteils über die gesamte Länge der Tragvorrichtung (100) in einer Richtung entlang ihrer Längsachse geschlossen sind.

3. Tragvorrichtung (100) nach Anspruch 2, wobei in Bezug auf die Gesamtfläche der Profilschenkel (111, 112) die Flächen der Seitenflächen der Profilschenkel (111, 112) zu mindestens 75 %, vorzugsweise zu mindestens 85 %, besonders bevorzugt zu mindestens 90 % geschlossen sind.

4. Tragvorrichtung (100) nach einem der vorhergehenden Ansprüche, wobei die Profilschenkel (111, 112) eine Trapezform, insbesondere eine rechtwinklige Trapezform, aufweisen und der Basisabschnitt (113) eine Rechteckform aufweist.

5. Tragvorrichtung (100) nach einem der vorhergehenden Ansprüche, wobei die Tragvorrichtung (100) dazu ausgelegt ist, das Solarmodul (S1, S2, S3, S4) in einem Winkel von 3 - 40°, insbesondere 5 - 20°, vorzugsweise 6 - 8°, in Bezug auf die Montagefläche zu halten.

6. Tragvorrichtung (100) nach einem der vorhergehenden Ansprüche, wobei der mindestens eine von jedem der Profilschenkel (111, 112) abstehende Vorsprung (111a, 112a) ein ebener Flansch ist, der sich parallel zur Längsachse entlang des freien Endabschnitts (111.1, 112.1) des jeweiligen Profilschenkels (111, 112), insbesondere von der Vorderseite (114) zur Rückseite (115) des U-förmigen Profils (110), erstreckt, und wobei vorzugsweise ein Winkel zwischen dem ebenen Flansch und dem Profilschenkel (111, 112) etwa 70 - 110°, am meisten bevorzugt 90°, beträgt.

7. Tragvorrichtung (100) nach einem der vorhergehenden Ansprüche, wobei der mindestens eine von jedem der Profilschenkel (111, 112) oder dem ersten Abschnitt des L-förmigen Stabes abstehende Vorsprung (111a, 112a) eine oder mehrere Kerben und/oder Öffnungen (111a.1, 112a.1) zum mechanischen Anbringen eines oder mehrerer Schutzpolster (300a, 300b) umfasst.

8. Tragvorrichtung (100) gemäß einem der vorhergehenden Ansprüche, wobei mindestens der Basiskörper ein einstückiges Formteil ist, der Basiskörper vorzugsweise einstückig mit den Vorsprüngen (111a, 112a) und dem Fixierelement (120a, 120b, ..., 120f) ausgebildet ist, am meisten bevorzugt die gesamte Tragvorrichtung (100) ein einstückiges Formteil ist.

9. Tragvorrichtung (100) nach einem der vorhergehenden Ansprüche, ferner umfassend mindestens ein Verbindungselement (116, 117), insbesondere einen Befestigungswinkel, zum mechanischen Verbinden zweier Tragvorrichtungen (100, 100') nach einem der vorhergehenden Ansprüche, wobei die Rückseiten (115, 115') der U-förmigen Profile (110) einander zugewandt sind.

10. Teilesatz, umfassend eine Tragvorrichtung (100) nach einem der Ansprüche 1 - 9 und mindestens ein, vorzugsweise zwei oder mehr, Befestigungselement(e) (200) zum Anbringen der Tragvorrichtung (100) an der Montagefläche, wobei das mindestens eine Befestigungselement (200) einen Basisplattenabschnitt (201) und einen von dem Basisplattenabschnitt (201) nach oben vorstehenden Profilabschnitt (202) umfasst, der dazu ausgelegt ist, das mindestens eine Fixierelement (120a, 120b, ..., 120f) der Tragvorrichtung (100) zu umgeben und formschlüssig zu fixieren.

11. Teilesatz nach Anspruch 10, ferner umfassend ein oder mehrere Schutzpolster (300a, 300b), die dazu ausgelegt sind, mechanisch an dem mindestens einen von jedem der Profilschenkel (111, 112) abstehenden Vorsprung (111a, 112a) angebracht zu werden, wobei die Schutzpolster (300a, 300b) vorzugsweise aus einem von der Tragvorrichtung (100) verschiedenen Material, insbesondere aus einem Kunststoffmaterial, bestehen.

12. Anordnung, umfassend mindestens eine, vorzugsweise mindestens zwei Tragvorrichtungen (100) nach einem der Ansprüche 1 - 9 und mindestens ein Befestigungselement (200) nach einem der Ansprüche 10 - 11 oder umfassend einen Teilesatz nach einem der Ansprüche 10 - 11, wobei die Tragvorrichtung (100) auf einer Montagefläche, insbesondere auf einem Dach eines Gebäudes (M, RT), angeordnet und mit mindestens einem, vorzugsweise zwei oder mehr, der Befestigungselemente (200) an der Montagefläche fixiert wird.

13. Anordnung nach Anspruch 12, wobei der aus der Basisplatte (201) nach oben ragende Profilabschnitt (202) des Befestigungselements (200) das mindestens eine Fixierelement (120a, 120b, ..., 120f) der Tragvorrichtung (100) umgibt und formschlüssig fixiert.

14. Anordnung nach einem der Ansprüche 12 - 13, wobei mindestens ein, vorzugsweise zwei, vier oder sechs, Schutzpolster (300a, 300b) nach Anspruch 12 an dem mindestens einen von jedem Profilschenkel (111, 112) der Tragvorrichtung (100) abstehenden Vorsprung (111a, 112a) angebracht sind und zwischen den Vorsprüngen (111a, 112a) und der Montagefläche angeordnet sind.

## Revendications

1. Dispositif de support (100) pour l'installation d'un module solaire (S1, S2, S3, S4), notamment un panneau photovoltaïque, sur une surface d'installation, en particulier sur un toit d'un bâtiment (M, RT), le dispositif de support (100) comprenant :
a) un corps de base sous la forme d'un profilé en U (110) comportant deux pattes de profilé (111, 112) et une section formant base (113) reliant les deux pattes de profilé (111, 112) ; une surface extérieure de la section formant base (113) du profilé en U (110) étant conçue pour supporter un module solaire (S1, S2, S3, S4), et une profondeur de profilé du profilé en U (110) augmentant le long d'un axe longitudinal d'une face avant (114) à une face arrière (115) du profilé en U (110) ; et
b) au niveau de chacune des deux parties d'extrémité libre (111.1, 112.1) des pattes de profilé (111, 112), au moins une saillie (111a, 112a) s'étendant à partir de la patte de profilé (111, 112) respective, l'au moins une saillie (111a, 112a) étant conçue de façon à constituer une portée pour la disposition du dispositif de support (100) sur une surface d'installation ; et
c) au moins un élément d'assujettissement (120a, 120b, ..., 120f) qui est conçu pour entrer en prise avec une pièce de fixation (200) pour la fixation du dispositif de support (100) à la surface d'installation,
**caractérisé en ce qu'**
une barre en L est disposée au niveau de chacune des deux parties d'extrémité libre (111.1, 112.1) des pattes de profilé (111, 112) du profilé en U (110), celle-ci s'étendant parallèlement à la patte de profilé (111, 112) respective, de préférence de la face avant (114) à la face arrière (115) du profilé en U (110), une première section de la barre en L étant en contact avec la partie d'extrémité libre (111.1, 112.1) de la patte de profilé (111, 112) respective et étant conçue de façon à constituer l'au moins une saillie (111a, 112a) s'étendant à partir de la patte de profilé (111, 112) respective et de façon à constituer la portée pour la disposition du dispositif de support (100) sur une surface d'installation, et au moins une région de la seconde extrémité (111b, 112b), qui est l'extrémité libre, de la barre en L étant conçue de façon à constituer l'élément d'assujettissement (120a, 120b, ..., 120f).

2. Dispositif de support (100) selon la revendication 1, les deux pattes de profilé (111, 112) formant des faces latérales du dispositif de support (100), qui sont en majeure partie fermées sur toute la longueur du dispositif de support (100) dans une direction suivant son axe longitudinal.

3. Dispositif de support (100) selon la revendication 2, les surfaces des faces latérales des pattes de profilé (111, 112) étant, relativement à la surface totale des pattes de profilé (111, 112), fermées à au moins 75 %, de préférence fermées à au moins 85 %, le plus préférablement fermées à au moins 90 %.

4. Dispositif de support (100) selon l'une quelconque des revendications précédentes, les pattes de profilé (111, 112) présentant des formes trapézoïdales, en particulier des formes trapézoïdales rectangles, et la section formant base (113) présentant une forme rectangulaire.

5. Dispositif de support (100) selon l'une quelconque des revendications précédentes, le dispositif de support (100) étant conçu pour supporter le module solaire (S1, S2, S3, S4) à un angle de 3 à 40°, en particulier de 5 à 20°, de préférence de 6 à 8°, relativement à la surface d'installation.

6. Dispositif de support (100) selon l'une quelconque des revendications précédentes, l'au moins une saillie (111a, 112a) s'étendant à partir de chacune des pattes de profilé (111, 112) étant une ailette plane s'étendant parallèlement à l'axe longitudinal le long la partie d'extrémité libre (111.1, 112.1) de la patte de profilé (111, 112) respective, en particulier de la face avant (114) à la face arrière (115) du profilé en U (110) et, de préférence, un angle entre l'ailette plane et la patte de profilé (111, 112) étant d'environ 70 à 110°, le plus préférablement de 90°.

7. Dispositif de support (100) selon l'une quelconque des revendications précédentes, l'au moins une saillie (111a, 112a) s'étendant à partir de chacune des pattes de profilé (111, 112) ou la première section de la barre en L comprenant une ou plusieurs échancrures et/ou ouvertures (111a.1, 112a.1) pour la fixation mécanique d'un ou de plusieurs patins de protection (300a, 300b).

8. Dispositif de support (100) selon l'une quelconque des revendications précédentes, au moins le corps de base étant une pièce formée d'un seul tenant, de préférence le corps de base étant formé d'un seul tenant avec les saillies (111a, 112a) et l'élément d'assujettissement (120a, 120b, ..., 120f), le plus préférablement le dispositif de support (100) entier étant une pièce formée d'un seul tenant.

9. Dispositif de support (100) selon l'une quelconque des revendications précédentes, comprenant, en outre, au moins un élément de raccordement (116, 117), en particulier une équerre, pour le raccordement mécanique de deux dispositifs de support (100, 100') tels que décrits dans l'une quelconque des revendications précédentes de sorte que les faces arrière (115, 115') de leurs profilés en U (110) soient placées en regard l'une de l'autre.

10. Ensemble de composants comprenant un dispositif de support (100) selon l'une quelconque des revendications 1 à 9 et au moins une, de préférence deux ou plus de deux, pièces de fixation (200) pour la fixation du dispositif de support (100) à la surface d'installation, l'au moins une pièce de fixation (200) comprenant une section formant plaque de base (201) et une section formant profilé (202) faisant saillie vers le haut à partir de la section formant plaque de base (201), qui est conçue pour entourer et assujettir avec imbrication l'au moins un élément d'assujettissement (120a, 120b, ..., 120f) du dispositif de support (100).

11. Ensemble de composants selon la revendication 10, comprenant, en outre, un ou plusieurs patins de protection (300a, 300b), qui sont conçus pour être fixés mécaniquement à l'au moins une saillie (111a, 112a) s'étendant à partir de chacune des pattes de profilé (111, 112), les patins de protection (300a, 300b) étant, de préférence, fait d'un matériau différent de celui du dispositif de support (100), en particulier d'une matière plastique.

12. Système comprenant au moins un, de préférence au moins deux, dispositifs de support (100) selon l'une quelconque des revendications 1 à 9 et au moins une pièce de fixation (200) telle que décrite dans l'une ou l'autre des revendications 10 et 11 ou comprenant un ensemble de composants selon l'une ou l'autre des revendications 10 et 11, le dispositif de support (100) étant placé sur une surface d'installation, notamment sur un toit d'un bâtiment (M, RT), et assujetti à la surface d'installation au moyen d'au moins une, de préférence deux ou plus de deux, pièces de fixation (200).

13. Système selon la revendication 12, la section formant profilé (202) de la pièce de fixation (200) faisant saillie vers le haut à partir de la plaque de base (201) entourant et assujettissant avec imbrication l'au moins un élément d'assujettissement (120a, 120b, ..., 120f) du dispositif de support (100).

14. Système selon l'une ou l'autre des revendications 12 et 13, au moins un, de préférence deux, quatre ou six, patins de protection (300a, 300b) tels que décrits dans la revendication 12 étant fixés à l'au moins une saillie (111a, 112a) s'étendant à partir de chacune des pattes de profilé (111, 112) du dispositif de support (100) et étant placés entre les saillies (111a, 112a) et la surface d'installation.
